# EUROPEAN PATENT APPLICATION

(11) **EP 4 539 571 A1**
(43) Date of publication of application: **16.04.2025**
(21) Application number: 23830023.0
(22) Date of filing: 19.06.2023
(51) Int. Cl.: H04W 72/04

(54) **DATA TRANSMISSION METHOD AND COMMUNICATION APPARATUS**

(30) Priority: 27.06.2022 CN 202210783464
(71) Applicant: Huawei Technologies Co., Ltd., Shenzhen, Guangdong 518129 (CN)
(72) Inventor: HUANG, Guogang, Shenzhen, Guangdong 518129 (CN)
(74) Representative: Maiwald GmbH
(86) International application number: PCT/CN2023/101118
(87) International publication number: WO 2024/001843

(57) **Abstract**

A data transmission method and a communication apparatus are provided, and may be applied to a wireless local area network system that supports an IEEE 802.11ax next-generation Wi-Fi protocol, for example, 802.11be, Wi-Fi 7, or EHT, or for another example, 802.11 series protocols such as a next-generation protocol of 802.11be and Wi-Fi 8. The method includes: A first station generates a first frame, and sends the first frame to a wireless access point, where the first frame is for indicating that the first station has to-be-transmitted data that needs to be sent. The first station clearly indicates, to the wireless access point by using the first frame, that the first station has the to-be-transmitted data that needs to be sent. In this way, even if the wireless access point obtains a transmission opportunity that is for transmitting data of the wireless access point, the wireless access point can clearly know that the first station has the to-be-transmitted data that needs to be sent. Therefore, the wireless access point may allocate remaining transmission time in the transmission opportunity of the wireless access point to the first station or schedule the first station, so that the first station sends the to-be-transmitted data in time, thereby reducing a transmission latency of the to-be-transmitted data.

## Description

### CROSS-REFERENCE TO RELATED APPLICATIONS

This application claims priority to Chinese Patent Application No. 202210783464.9, filed with the China National Intellectual Property Administration on June 27, 2022 and entitled "DATA TRANSMISSION METHOD AND COMMUNICATION APPARATUS", which is incorporated herein by reference in its entirety.

### TECHNICAL FIELD

This application relates to the field of wireless fidelity technologies, and in particular, to a data transmission method and a communication apparatus.

### BACKGROUND

A wireless local area network (wireless local area network, WLAN) works on an unlicensed frequency band. To be specific, any device that complies with a radio frequency specification can send or receive data on the frequency band. A wireless access point located in a WLAN system obtains one transmission opportunity (transmit opportunity, TXOP) through a channel access process. Provided that one TXOP is obtained, the wireless access point may transmit a data frame, a control frame, and a management frame, and receive a response frame in the obtained TXOP.

In a possible scenario, in the TXOP preempted by the wireless access point, a station may have data with a higher priority that needs to be sent to the wireless access point. For example, the station needs to send low-latency data to the wireless access point. For the wireless access point, if the wireless access point does not know that the station has data to be sent to the wireless access point, the wireless access point does not send an available transmission opportunity in the TXOP to the station. As a result, the station cannot send the data to the wireless access point in time, and a transmission latency requirement such as low-latency service data cannot be met.

This application provides a data transmission method and a communication apparatus, so that a transmission requirement of a low-latency service can be met.

According to a first aspect, an embodiment of this application provides a data transmission method. The method may be performed by a first station. The first station may be a communication device or a communication apparatus that can support the communication device in implementing a function required in the method, for example, a chip system. For example, the first station is a first communication device, or a chip disposed in the first communication device, or another component configured to implement a function of the first communication device.

The method includes: The first station generates a first frame, and sends the first frame to a wireless access point, where the first frame is for indicating that the first station has to-be-transmitted data that needs to be sent. The first station clearly indicates, to the wireless access point by using the first frame, that the first station has the to-be-transmitted data that needs to be sent. In this way, even if the wireless access point obtains a transmission opportunity that is for transmitting data of the wireless access point, the wireless access point can clearly know that the first station has the to-be-transmitted data that needs to be sent. Therefore, the wireless access point may allocate remaining transmission time in the transmission opportunity of the wireless access point to the first station or schedule the first station, so that the first station sends the to-be-transmitted data in time, thereby reducing a transmission latency of the to-be-transmitted data.

In a possible implementation, the first frame includes a more data field, and the more data field is for indicating that the first station has the to-be-transmitted data that needs to be sent. The first station indicates, by using the more data field, that the first station has the to-be-transmitted data that needs to be sent, without additionally adding or defining a new field.

In a possible implementation, the first frame is an acknowledgement frame, for example, an acknowledgement (acknowledgement, ACK) frame or a block acknowledgement (block acknowledgement, BA) frame.

In a possible implementation, the first frame is a specific frame, and the specific frame further includes identity information of the first station. For example, the specific frame may be a clear to send to self (Clear to send to self, CTS-to-Self) frame. The CTS-to-Self frame includes a more data field and a receiver address field, and the receiver address field may indicate the identity information of the first station, for example, address information of the first station.

In a possible implementation, the method further includes: The first station determines that the wireless access point can receive the specific frame of the first station in a process of sending data to a second station. It may be understood that the wireless access point has a limited full-duplex capability, that is, in the data sending process, the wireless access point can receive only a specific type of specific frame, for example, can receive the CTS-to-Self frame. In this case, the first station may notify, by using the CTS-to-Self frame, the wireless access point that the first station has the to-be-transmitted data that needs to be sent, to avoid a case in which the wireless access point does not know that the first station has the to-be-transmitted data that needs to be sent because the wireless access point cannot receive a frame sent by the first station other than specific frame.

In a possible implementation, the method further includes: The first station receives transmission opportunity information sent by the wireless access point, where the transmission opportunity information is for indicating first transmission time; and the first station sends the to-be-transmitted data to the wireless access point in the first transmission time. The first transmission time is a part of or all transmission time in a remaining transmission opportunity in a first transmission opportunity. The first transmission opportunity is a channel transmission opportunity that is obtained by the wireless access point and that is for sending data to the first station.

In a possible implementation, that the first station receives transmission opportunity information sent by the wireless access point includes: The first station receives a reverse direction grant (reverse direction grant, RDG) or a more (More) presentation protocol data unit (presentation protocol data unit, PPDU) field sent by the wireless access point. In other words, the first transmission time allocated to the first station may be indicated by the wireless access point by using the RDG or the more PPDU field. For example, the first transmission time is all the transmission time in the remaining transmission opportunity in the first transmission opportunity.

In a possible implementation, the transmission opportunity information is a transmission opportunity sharing trigger frame, the transmission opportunity sharing trigger frame includes an allocation duration field, and the allocation duration field is for indicating the first transmission time. That is, the first station may determine, based on a transmission opportunity sharing mechanism, the first transmission time allocated by the wireless access point to the first station. For example, the first transmission time is the part of or all the transmission time in the remaining transmission opportunity in the first transmission opportunity.

In a possible implementation, the transmission opportunity information is further for indicating that the first station is allowed to send uplink data or point-to-point (point-to-point, P2P) data. If the transmission opportunity information is the transmission opportunity sharing trigger frame, the transmission opportunity information is further for indicating that the first station is allowed to send the uplink data or the P2P data.

In a possible implementation, the method further includes: The first station receives a trigger frame sent by the wireless access point, and sends the uplink data to the wireless access point based on the trigger frame, where the trigger frame is for scheduling the first station to send the uplink data. The first station indicates, to the wireless access point, that the first station has the to-be-transmitted data that needs to be sent, and the wireless access point may schedule, by using the trigger frame, the first station to send the uplink data. For example, the trigger frame may include the first transmission time that is allocated to the first station and that is for sending the to-be-transmitted data, to reduce a latency of the to-be-transmitted data of the first station.

In a possible implementation, the more data field is further for indicating that a priority of the to-be-transmitted data of the first station is higher than a priority of the data sent by the wireless access point to the first station. When the priority of the to-be-transmitted data of the first station is higher than the priority of the data sent by the wireless access point to the first station, the first station indicates, to the wireless access point by using the more data field, that the first station has the to-be-transmitted data that needs to be sent, to avoid an increase in a transmission latency of data with a higher priority because the to-be-transmitted data of the first station is preferentially sent.

In a possible implementation, that the more data field is for indicating that the first station has the to-be-transmitted data that needs to be sent to the wireless access point includes: The more data field is for indicating that the to-be-transmitted data of the first station is low-latency data or latency-sensitive data. It may be understood that the low-latency data or the latency-sensitive data requires a low transmission latency, and needs to be preferentially sent. The first station indirectly indicates, by indicating that the to-be-transmitted data that needs to be sent is any type of data, whether the first station has the to-be-transmitted data that needs to be sent to the wireless access point, and indicates that the priority of the to-be-transmitted data of the first station is higher than the priority of the data that needs to be sent by the wireless access point. In this way, the wireless access point can determine whether to allocate the first transmission time to the first station, to avoid a case in which data with a long latency is preferentially transmitted because the wireless access point allocates the first transmission time to the first station by default.

In a possible implementation, the first frame further includes a first field, and the first field is for indicating a service identifier and/or an access type of the to-be-transmitted data of the first station. The service identifier may indicate a priority of service data transmission, and the access type may also indicate a priority of channel access, that is, indirectly indicate the priority of the service data transmission. The first station clearly notifies, by using the more data field and the first field, the wireless access point of the priority of the to-be-transmitted data that needs to be sent by the first station to the wireless access point, so that the wireless access point can be assisted in determining whether to allocate the first transmission time to the first station, to ensure that data with a low latency requirement is preferentially transmitted.

In a possible implementation, the first frame further includes a second field, the second field is for indicating remaining time for discarding the to-be-transmitted data of the first station, and shorter remaining time for discarding the to-be-transmitted data indicates a higher priority of the to-be-transmitted data. That is, the priority of the to-be-transmitted data is indirectly indicated by using the remaining time for discarding the to-be-transmitted data, so that the wireless access point determines whether to allocate the first transmission time to the first station, to ensure that the data with the low latency requirement is preferentially transmitted.

In a possible implementation, the first frame further includes a third field, and the third field is for indicating duration that the first station expects to be allocated by the wireless access point. The duration that the first station expects to be allocated by the wireless access point may also be understood as duration that the first station requests to be allocated by the wireless access point. In addition to notifying the first wireless node that the first station has the to-be-transmitted data that needs to be sent to the first wireless point, the first station may further request the duration allocated by the wireless access point, so that the wireless access point allocates proper duration to the first station, to save resources, and improve resource utilization.

In a possible implementation, the method further includes: The first station receives first capability information sent by the wireless access point, where the first capability information indicates that the wireless access point can send or receive a frame with the more data field set to 1. The first station may determine, by using the first capability information, that the wireless access point can send or receive the frame with the more data field set to 1, to avoid sending the frame with the more data field set to 1 to the wireless access point that cannot send or receive the frame with the more data field set to 1, that is, avoid a case in which the first station cannot notify the first access point that the first station has the to-be-transmitted data that needs to be sent to the first access point.

In a possible implementation, the first capability information is carried in a more data acknowledgement field, and the more data acknowledgement field being set to 1 indicates that the wireless access point can send or receive the frame with the more data field set to 1.

In a possible implementation, the method further includes: The first station sends second capability information to the wireless access point, where the second capability information indicates that the first station can send or receive a frame with the more data field set to 1. The first station may notify, by using the second capability information, the wireless access point whether the first station can send or receive the frame with the more data field set to 1, so that the wireless access point clearly determines whether to send, to the first station, the frame with the more data field set to 1.

In a possible implementation, the second capability information is carried in a more data acknowledgement field, and the more data acknowledgement field being set to 1 indicates that the first station can send or receive the frame with the more data field set to 1.

According to a second aspect, an embodiment of this application provides a data transmission method. The method may be performed by a wireless access point. The wireless access point may be a communication device or a communication apparatus that can support the communication device in implementing a function required in the method, for example, a chip system. For example, the wireless access point is a second communication device, or a chip disposed in the second communication device, or another component configured to implement a function of the second communication device.

The method includes: The wireless access point receives a first frame sent by a first station, and sends transmission opportunity information to the first station; or the wireless access point receives a first frame sent by a first station, and sends a trigger frame to the first station, where the first frame is for indicating that the first station has to-be-transmitted data that needs to be sent, the transmission opportunity information is for indicating a first transmission opportunity, the first transmission opportunity is a part of or all transmission opportunities in a remaining transmission opportunity in the first transmission opportunity, the first transmission opportunity is a channel transmission opportunity that is obtained by the wireless access point and that is for sending data to the first station, and the trigger frame is for scheduling the first station to send uplink data.

In a possible implementation, the first frame includes a more data field, and the more data field is for indicating that the first station has the to-be-transmitted data that needs to be sent to the wireless access point.

In a possible implementation, the first frame is an acknowledgement frame.

In a possible implementation, the first frame is a specific frame, and the feature frame further includes identity information of the first station.

In a possible implementation, the wireless access point can receive the specific frame of the first station in a process of sending data to a second station.

In a possible implementation, that the wireless access point sends transmission opportunity information to the first station includes: The wireless access point sends an RDG or a more PPDU field to the first station.

In a possible implementation, the transmission opportunity information is a transmission opportunity sharing trigger frame, the transmission opportunity sharing trigger frame includes an allocation duration field, and the allocation duration field is for indicating the first transmission time.

In a possible implementation, the transmission opportunity information is further for indicating that the first station is allowed to send uplink data or P2P data.

In a possible implementation, the more data field is further for indicating that a priority of the to-be-transmitted data of the first station is higher than a priority of the data sent by the wireless access point to the first station.

In a possible implementation, that the more data field is for indicating that the first station has the to-be-transmitted data that needs to be sent includes: The more data field is for indicating that the to-be-transmitted data of the first station is low-latency data or latency-sensitive data.

In a possible implementation, the first frame further includes a first field, and the first field is for indicating a service identifier and/or an access type of the to-be-transmitted data of the first station.

In a possible implementation, the first frame further includes a second field, the second field is for indicating remaining time for discarding the to-be-transmitted data of the first station, and shorter remaining time for discarding the to-be-transmitted data indicates a higher priority of the to-be-transmitted data.

In a possible implementation, the first frame further includes a third field, and the third field is for indicating duration that the first station expects to be allocated by the wireless access point.

In a possible implementation, the method further includes: The wireless access point sends first capability information to the first station, where the first capability information indicates that the wireless access point can send or receive a frame with the more data field set to 1.

In a possible implementation, the first capability information is carried in a more data acknowledgement field, and the more data acknowledgement field being set to 1 indicates that the wireless access point can send or receive the acknowledgement frame with the more data field set to 1.

In a possible implementation, the method further includes: The wireless access point receives second capability information sent by the first station, where the second capability information indicates that the first station can send or receive a frame with the more data field set to 1.

In a possible implementation, the second capability information is carried in a more data acknowledgement field, and the more data acknowledgement field being set to 1 indicates that the first station can send or receive the frame with the more data field set to 1.

For beneficial effects of the second aspect and the implementations of the second aspect, refer to descriptions of beneficial effects of the first aspect and the implementations of the first aspect.

According to a third aspect, an embodiment of this application provides a communication apparatus. The communication apparatus has a function of implementing behavior in the method embodiment of any one of the first aspect and the second aspect. For beneficial effect, refer to descriptions of the first aspect and the second aspect. Details are not described herein again.

The communication apparatus may be a station, and is configured to perform the method performed by the first station in the first aspect, or the communication apparatus may be an apparatus that can implement the method provided in the first aspect, for example, a chip or a chip system. In a possible design, the communication apparatus includes a corresponding means (means) or module for performing the method in the first aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or may be understood as that the sending unit and the receiving unit are a same functional module. Alternatively, the transceiver unit is also understood as a general term of a sending unit and a receiving unit, and the sending unit and the receiving unit may be different functional modules. These units (modules) may perform a corresponding function in the method example of the first aspect. For details, refer to the detailed descriptions in the method example. Details are not described herein again.

The communication apparatus may be a wireless access point, and is configured to perform the method performed by the wireless access point in the second aspect, or the communication apparatus may be an apparatus that can implement the method provided in the second aspect, for example, a chip or a chip system. In a possible design, the communication apparatus includes a corresponding means (means) or module for performing the method in the second aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or may be understood as that the sending unit and the receiving unit are a same functional module. Alternatively, the transceiver unit is also understood as a general term of a sending unit and a receiving unit, and the sending unit and the receiving unit may be different functional modules. These units (modules) may perform a corresponding function in the method example of the second aspect. For details, refer to the detailed descriptions in the method example. Details are not described herein again.

According to a fourth aspect, an embodiment of this application provides a communication apparatus. The communication apparatus may perform the method according to any one of the first aspect and the second aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first station or the wireless access point in the foregoing methods. The communication interface may be implemented through an antenna, a feeder, a codec, and the like in the communication apparatus.

According to a fifth aspect, an embodiment of this application provides a communication apparatus. The communication apparatus includes an input/output interface and a logical circuit. The input/output interface is configured to input and/or output information. The logical circuit is configured to perform the method according to any one of the first aspect and the second aspect.

According to a sixth aspect, an embodiment of this application provides a chip system. The chip system includes a processor, and may further include a memory and/or a communication interface, configured to implement the method according to any one of the first aspect and the second aspect. In a possible implementation, the chip system further includes the memory, configured to store a computer program. The chip system may include a chip, or may include a chip and another discrete component. The communication interface may be an input/output interface of the chip, for example, an input/output pin.

According to a seventh aspect, an embodiment of this application provides a communication system. The communication system includes at least one station and at least one wireless access point, the station is configured to perform the method performed by the first station according to the first aspect, and the wireless access point is configured to perform the method performed by the wireless access point according to the second aspect.

According to an eighth aspect, this application provides a computer-readable storage medium. The computer-readable storage medium stores a computer program. When the computer program is run, the method according to any one of the first aspect and the second aspect is implemented.

According to a ninth aspect, a computer program product is provided. The computer program product includes computer program code. When the computer program code is run, the method according to any one of the first aspect and the second aspect is performed.

For beneficial effect of the third aspect to the ninth aspect and the implementations of the third aspect to the ninth aspect, refer to descriptions of beneficial effect of the first aspect and the second aspect and the implementations of the first aspect and the second aspect.

### BRIEF DESCRIPTION OF DRAWINGS

FIG. 1 is a diagram of a network architecture of a WLAN to which an embodiment of this application is applicable;
FIG. 2 is a diagram of a network architecture of another WLAN to which an embodiment of this application is applicable;
FIG. 3 is a diagram of a frame structure of a frame control field according to an embodiment of this application;
FIG. 4 is a diagram of a format of a QoS Info field for an AP according to an embodiment of this application;
FIG. 5 is a diagram of a format of a QoS Info field for a STA according to an embodiment of this application;
FIG. 6 is a schematic flowchart of a data transmission method according to an embodiment of this application;
FIG. 7 is a diagram of a frame format of a CTS frame according to an embodiment of this application;
FIG. 8 is a diagram of a structure of a communication apparatus according to an embodiment of this application; and
FIG. 9 is a diagram of another structure of a communication apparatus according to an embodiment of this application.

### DESCRIPTION OF EMBODIMENTS

Technical solutions provided in this application are applicable to a WLAN scenario, for example, are applicable to an IEEE 802.11 system standard, for example, the 802.11a/b/g standard, the 802.11n standard, the 802.11ac standard, the 802.11ax standard, or a next-generation standard of the 802.11ax standard, for example, the 802.11be standard, Wi-Fi 7, or EHT, or for another example, a next-generation standard of 802.11be, Wi-Fi 8, or a next-generation standard of Wi-Fi 8. Alternatively, the technical solutions provided in this application are applicable to a wireless local area network system, for example, an internet of things (internet of things, IoT) network or a vehicle-to-X (Vehicle-to-X, V2X) network. Certainly, the technical solutions provided in this application are alternatively applicable to another possible communication system, for example, a long term evolution (long term evolution, LTE) system or a new radio (new radio, NR) system, or are applicable to another next-generation mobile communication system, for example, a sixth generation (sixth generation, 6G) communication system, or another similar communication system.

It may be understood that, although embodiments of this application are mainly described by using an example of a deployed WLAN network, especially a network to which the IEEE 802.11 system standard is applied, a person skilled in the art easily understands that various aspects in this application may be extended to other networks that use various standards or protocols, for example, Bluetooth (Bluetooth), a high performance radio LAN (high performance radio LAN, HIPERLAN) (which is a wireless standard similar to the IEEE 802.11 standard, and is mainly used in Europe) and a wide area network (WAN), a personal area network (personal area network, PAN), or another network that is known or developed in the future. Therefore, regardless of used coverage and a used wireless access protocol, various aspects provided in this application are applicable to any appropriate wireless network.

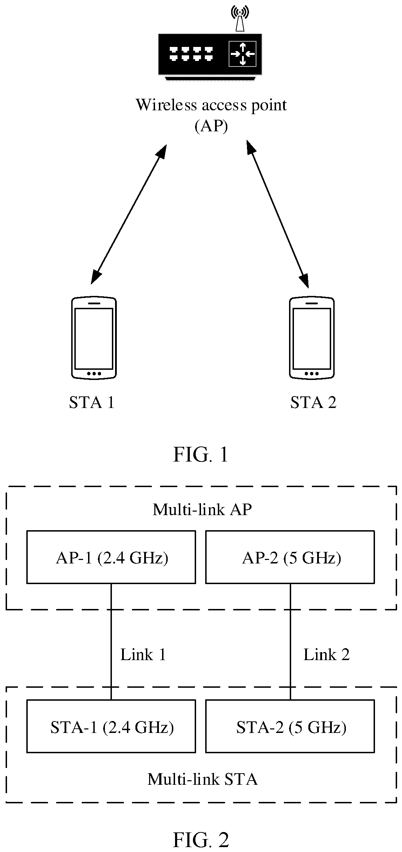

For example, FIG. 1 is a diagram of a network architecture of a WLAN to which an embodiment of this application is applicable. In FIG. 1, the WLAN includes one wireless access point (access point, AP), and the AP may be associated with one or more stations (stations, STAs). As shown in FIG. 1, an example in which the AP is associated with two STAs is used. For example, the STAs associated with the AP include a STA 1 and a STA 2. Any AP may schedule a radio resource for an associated STA and/or an unassociated STA, and transmit data for the STA on the scheduled radio resource. For example, the AP may schedule radio resources for the STA 1 and the STA 2, and transmit data, including uplink data information and/or downlink data information, for the STA 1 and the STA 2 on the scheduled radio resources. In addition, embodiments of this application are applicable to communication between APs. For example, the APs may communicate with each other through a possible data link. Embodiments of this application are also applicable to communication between STAs. For example, the AP and the STA in embodiments of this application may be a wireless communication device that supports parallel transmission on a plurality of links, for example, are referred to as a multi-link device (Multi-link device, MLD) or a multi-band device (multi-band device, MBD), and have higher transmission efficiency and a higher throughput. In embodiments of this application, an AP supporting communication on a plurality of links may be referred to as an MLD AP, and a STA supporting communication on a plurality of links, namely, a multi-link STA, may be referred to as a non-access point station (non-Access Point Station, non-AP STA). It should be understood that quantities of APs and STAs in FIG. 1 are merely examples, and may be more or less.

FIG. 2 is a diagram of a network architecture of multi-link communication according to an embodiment of this application. In FIG. 2, one multi-link AP and one multi-link STA are used as an example, to illustrate that a multi-link device in a wireless local area network communicates with another device through a plurality of links. The multi-link AP may include a plurality of logical stations. As shown in FIG. 2, the multi-link AP includes an affiliated AP-1 and an affiliated AP-2. The multi-link STA may also include a plurality of logical stations. As shown in FIG. 2, the multi-link STA includes an affiliated STA-1 and an affiliated STA-2. Each logical station works on one link, and a plurality of logical stations are allowed to work on a same link. For example, the multi-link AP and the multi-link STA communicate in parallel through a link 1 and a link 2. Frequency bands on which the multi-link device works may include but are not limited to sub-1 GHz, 2.4 GHz, 5 GHz, 6 GHz, and a high-frequency 60 GHz. For example, a frequency band of the link 1 is 2.4 GHz, and a frequency band of the link 2 is 5 GHz.

The multi-link device in embodiments of this application may be a single-antenna device, or may be a multi-antenna device. For example, the multi-link device may be a device with more than two antennas. A quantity of antennas included in the multi-link device is not limited in embodiments of this application. In embodiments of this application, the multi-link device may allow services of a same access type to be transmitted on different links, and even allow a same data packet to be transmitted on different links; or may not allow services of a same access type to be transmitted on different links, but allow services of different access types to be transmitted on different links. The multi-link device may implement wireless communication according to 802.11 series protocols. For example, a station complying with an extremely high throughput (Extremely High Throughput, EHT), or a station complying with 802.11be or compatible with a station supporting 802.11be implements communication with another device. Certainly, the another device may be a multi-link device, or may not be a multi-link device.

The STA in embodiments of this application may be a wireless communication chip, a wireless sensor, or various user terminals, user apparatuses, access apparatuses, subscriber stations, subscriber units, mobile stations, user agents, user equipment, or other names that have a wireless communication function. The user terminal may include various handheld devices, vehicle-mounted devices, wearable devices, computing devices, or other processing devices connected to a wireless modem that have a wireless communication function; and various forms of user equipment (user equipment, UE), mobile stations (mobile stations, MSs), terminals (terminals), a terminal device (terminal equipment), portable communication devices, handheld devices, portable computing devices, entertainment devices, game devices or systems, global positioning system devices, any other proper devices configured to perform network communication through a wireless medium, or the like. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, and the like. The STA may be a router, a switch, a bridge, and the like. Herein, for ease of description, the device mentioned above is collectively referred to as a station or a STA. Optionally, the STA may support the 802.11be standard. The station may alternatively support a plurality of WLAN standards of the 802.11 family, such as 802.11ax, 802.11ac, 802.11n, 802.11g, 802.11b, 802.11a, 802.11be, Wi-Fi 7, Wi-Fi 8, or a next-generation standard of Wi-Fi 8. The various STAs described above, if located on a vehicle (for example, placed in the vehicle or mounted inside the vehicle), may be all considered as vehicle-mounted terminal devices. For example, the vehicle-mounted terminal device is also referred to as an on-board unit (on-board unit, OBU). Alternatively, the STAin this application may be a vehicle-mounted module, a vehicle-mounted assembly, a vehicle-mounted component, a vehicle-mounted chip, or a vehicle-mounted unit that is built in a vehicle as one or more components or units. The vehicle may implement the method in this application through the built-in STA.

In embodiments of this application, a communication apparatus configured to implement a function of the STA may be the STA, or may be an apparatus that can support the STA in implementing the function, for example, a chip system. The apparatus may be installed in the STA. In the technical solutions provided in embodiments of this application, an example in which the apparatus configured to implement the function of the STA is the STA is used to describe the technical solutions provided in embodiments of this application.

The AP in embodiments of this application is an apparatus that is deployed in a wireless communication network and that provides a wireless communication function for a STA associated with the AP. Certainly, the AP may alternatively be deployed outdoors. The AP is equivalent to a bridge that connects a wired network and a wireless network. A main function of the AP is to connect various wireless network clients together, and then connect the wireless network to an ethernet. The AP may be used as a hub of the communication system, and may be a communication device such as a base station, a router, a gateway, a repeater, a communication server, a switch, or a bridge with a Wi-Fi chip. The base station may include a macro base station, a micro base station, a relay station, and the like in various forms. Herein, for ease of description, the device mentioned above is collectively referred to as an AP. In addition, the AP may support the 802.11be standard or a next-generation standard of 802.11be, for example, a WLAN standard such as Wi-Fi 8. The AP may also support WLAN standards, for example, 802.11ax, 802.11ac, 802.11n, 802.11g, 802.11b, and 802.11a.

In embodiments of this application, a communication apparatus configured to implement a function of the AP may be the AP, or may be an apparatus that can support the AP in implementing the function, for example, a chip system. The apparatus may be installed in the AP. In the technical solutions provided in embodiments of this application, an example in which the apparatus configured to implement the function of the AP is the AP is used to describe the technical solutions provided in embodiments of this application.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, application scenarios, priorities, importance degrees, or the like of the plurality of objects. For example, a first station and a second station may be a same station, or may be different stations. In addition, the names do not indicate that priorities, application scenarios, importance degrees, or the like of the two stations are different. In this specification, "an embodiment of this application" means that particular features, structures, or characteristics related to the embodiment are included in at least one embodiment of the present invention. Therefore, "embodiments of this application" appearing throughout this specification do not necessarily mean a same embodiment. In addition, these particular features, structures, or characteristics may be combined in one or more embodiments in any appropriate manner.

Embodiments of this application may be applied to a WLAN system. A WLAN works on an unlicensed frequency band. To be specific, any device that complies with a radio frequency specification can send or receive data on the frequency band. A device located in the WLAN system obtains one TXOP through a random channel access process. Provided that one TXOP is obtained, the device may transmit a data frame, a control frame, and a management frame, and receive a response frame in the obtained TXOP. The device that obtains the TXOP may be referred to as a TXOP holder (TXOP holder), and the TXOP holder may be an AP or a STA. The TXOP includes duration required by the TXOP holder to transmit one or more pieces of data and a corresponding immediate response frame (where the immediate response frame herein may be an acknowledgement frame, a block acknowledgement frame, or the like). The TXOP holder obtains the TXOP, and may transmit data to a TXOP responder (TXOP responder) without interference within the obtained TXOP. The TXOP responder may be an AP or a STA.

If the TXOP responder (for example, an AP) has to-be-transmitted data that needs to be sent to the TXOP holder (for example, a STA), the TXOP responder may send an acknowledgement frame (for example, an ACK frame or a BA frame) including a more data (More Data) field to the STA, to indicate that the AP has the to-be-transmitted data that needs to be sent to the STA. For example, the acknowledgement frame includes a frame control field, and the frame control field includes the more data field. When the more data field is set to 1, it indicates that the STA is in a power saving (power saving) mode, and the AP has the to-be-transmitted data that needs to be sent to the STA.

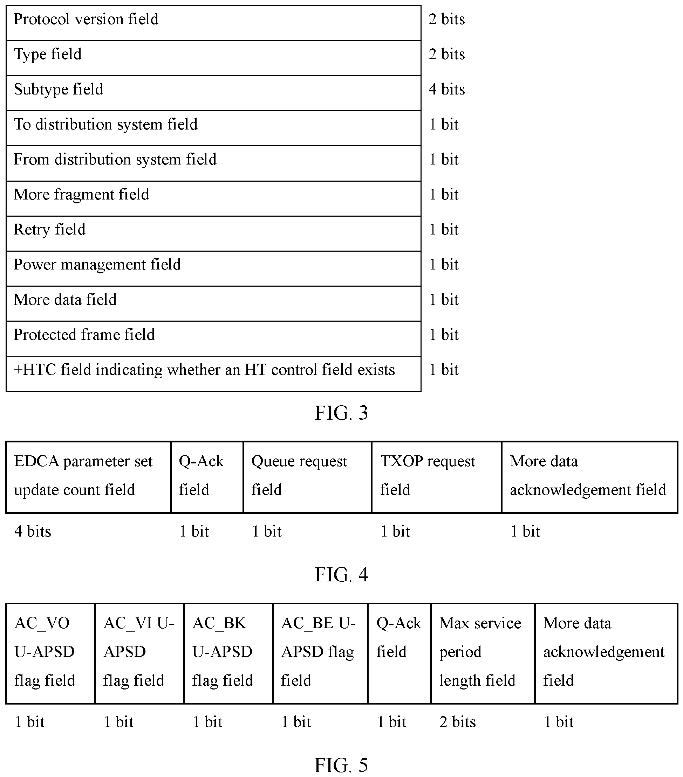

FIG. 3 is a diagram of a frame structure of a frame control (Frame Control) field according to an embodiment of this application. Specifically, the frame control field may include a 2-bit protocol version (Protocol Version) field, a 2-bit type (Type) field, a 4-bit subtype (Subtype) field, a 1-bit to distribution system (to distribution system, To DS) field, a 1-bit from distribution system (from distribution system, From DS) field, a 1-bit more fragment (more fragment, More Frag) field, a 1-bit retry (Retry) field, a 1-bit power management (power management, Pwr Mgt) field, a 1-bit more data field, a 1-bit protected frame (Protected Frame) field, and a 1-bit +HTC (+HTC) field indicating whether an HT control field exists. The power management field is for indicating a power management mode of the station after completing one frame sequence of exchange. If the power management field is set to 0, it indicates that the station is in an active mode. If the power management field is set to 1, it indicates that the station is in a power saving mode. Currently, the protocol does not support power saving of the AP. Therefore, the power management field is always set to 0 by the AP. When the station is in the power saving mode, the station may switch between an awake (Awake) state and a doze (Doze) state when a specific condition is met.

When a STA in a power saving mode receives an acknowledgement frame with a more data field set to 1, the STA keeps in an awake state, and waits for an AP to send to-be-transmitted data to the STA. The AP notifies the STAin the power saving mode by using the acknowledgement frame with the more data field set to 1. A mechanism in which the AP has the to-be-transmitted data to be sent to the STA is also referred to as a more data acknowledgement (More Data ACK) mechanism.

The more data ACK mechanism needs to be supported by both the AP and the STA, that is, both the AP and the STA need to support the more data ACK mechanism. "Supporting the more data ACK mechanism" in this application may mean having a capability of sending or receiving the acknowledgement frame in which the more data is set to 1, that is, being capable of sending or receiving the acknowledgement frame with the more data set to 1. Correspondingly, "not supporting the more data ACK mechanism" means not having a capability of sending or receiving the acknowledgement frame with the more data set to 1, that is, being not capable of sending or receiving the acknowledgement frame with the more data set to 1.

Whether the AP or the STA supports the more data ACK mechanism may be indicated by using a quality of service information (Quality of Service Information, QoS Info) field. For the AP, a format of the QoS Info field is shown in FIG. 4. Specifically, the QoS Info field may include a 4-bit enhanced distributed channel access (enhanced distributed channel access, EDCA) parameter set update count (Parameter Set Update Count) field, a 1-bit Q-Ack field, a 1-bit queue request (Queue Request) field, a 1-bit TXOP request (TXOP Request) field, and a 1-bit more data Ack field. The EDCA parameter set update count field is for indicating that an EDCA parameter or an MU EDCA parameter changes. The Q-Ack field is for indicating whether a Q-Ack is supported. The queue request field is for indicating whether the AP supports processing of a non-zero queue size (Queue Size) subfield in a QoS control field carried in a QoS data frame. The TXOP request field is for indicating whether the AP supports processing of a non-zero transmission opportunity duration request (TXOP Duration Requested) subfield in the QoS control field carried in the QoS data frame. For a high efficiency (high efficiency, HE) AP, when the more data Ack field is set to 1, it indicates that the HE AP can send a unicast ACK frame and a BA frame with the more data set to 1; or otherwise, the field is set to 0. For a non-HE AP, the more data Ack field is a reserved field.

For the STA, a format of the QoS Info field is shown in FIG. 5. Specifically, the QoS Info field may include a 1-bit voice service access category (access category voice, AC_VO) unscheduled automatic power saving delivery (unscheduled automatic power saving delivery, U-APSD) flag (flag) field, a 1-bit video service access category (access category video, AC_VI) U-APSD flag field, a 1-bit background service access category (access category background, AC_BK) U-APSD flag field, a 1-bit best effort service access category (access category best effort, AC_BE) U-APSD flag field, a 1-bit Q-Ack field, a 1-bit max service period length (Max service period Length, Max SP Length) field, and a 1-bit more data Ack field. When the AC_VO U-APSD flag field is set to 1, it indicates that a voice service access category is both trigger-enabled (Trigger-enabled) and delivery-enabled (Delivery-enabled). When the AC_VI U-APSD flag field is set to 1, it indicates that a video service access category is both trigger-enabled and delivery-enabled. When the AC_BK U-APSD flag field is set to 1, it indicates that a background service access category is both trigger-enabled and delivery-enabled. When the AC_BE U-APSD flag field is set to 1, it indicates that a best effort service access category is both trigger-enabled and delivery-enabled. The Q-Ack field is for indicating whether a Q-Ack is supported. The Max SP Length field is for indicating a quantity of maximum buffer units that can be received during a service period. For a non-AP non-HE station, when the more data Ack field is set to 1, it indicates that the STA can process an ACK frame with the more data set to 1, and keep in an awake state. For a non-AP HE station, when the more data Ack field is set to 1, it indicates that the STA can process an ACK frame and a BA frame with the more data set to 1, and keep in an awake state.

In a possible scenario, during a TXOP period of the TXOP holder, the TXOP responder has data with a higher priority that needs to be sent to the TXOP holder. For example, the TXOP responder has low-latency data or latency-sensitive data that needs to be sent to the TXOP holder. Because the TXOP is obtained by the TXOP holder and is for use by the TXOP holder, the TXOP responder cannot directly use the TXOP obtained by the TXOP holder. If the TXOP holder does not know that the TXOP responder has data to be sent to the TXOP holder, the TXOP holder naturally does not allocate an available TXOP to the TXOP responder. As a result, low-latency data of the TXOP responder cannot be sent to the TXOP holder in time, and a transmission latency requirement of a low-latency service or the like cannot be met.

In embodiments of this application, during the period of the TXOP obtained by the TXOP holder, when the TXOP responder has the data that needs to be sent to the TXOP holder, the TXOP responder may notify the TXOP holder that the TXOP responder has the data that needs to be sent to the TXOP holder. Therefore, the TXOP holder allocates available transmission time in the obtained TXOP to the TXOP responder, and the TXOP responder uses the allocated transmission time to send the data to the TXOP holder. Because the TXOP responder sends the data by using the transmission time in the TXOP obtained by the TXOP holder, the TXOP responder does not need to wait for the TXOP, and then send the data to the current TXOP holder through random channel access, that is, preferentially send the data. Therefore, a data transmission latency can be reduced, and a transmission requirement of a low-latency service can be met.

The following describes the technical solutions provided in embodiments of this application with reference to the accompanying drawings.

Embodiments of this application provide a data transmission method. The method may be applied to a WLAN system, for example, applied to the system shown in FIG. 1. For example, the TXOP holder is an AP, and the TXOP responder is a STA. In the system shown in FIG. 1, the TXOP holder may be the AP in FIG. 1, and the TXOP responder may be the STA 1 or the STA 2. In addition, the AP and the STA in embodiments of this application may be a wireless communication device that supports parallel transmission on a plurality of links. For example, in embodiments of this application, the TXOP holder may be the AP-1 or the AP-2 in the multi-link AP in FIG. 2, and the TXOP responder may be the STA-1 or the STA-2 in the multi-link STA. There may be a plurality of TXOP holders and a plurality of TXOP responders. For ease of description, the following uses an example in which the TXOP holder is an AP and the TXOP responder includes a first STA and/or a second STA. It should be understood that, if the AP is a multi-link AP, the TXOP holder may be an AP-1 or an AP-2 in the multi-link AP. In the following, unless otherwise specified, "if" and "in case" in embodiments of this application may be replaced; and unless otherwise specified, "when" and "in a case of" may be replaced. In embodiments of this application, steps illustrated by dashed lines indicate that the steps are optional steps, and are not mandatory steps.

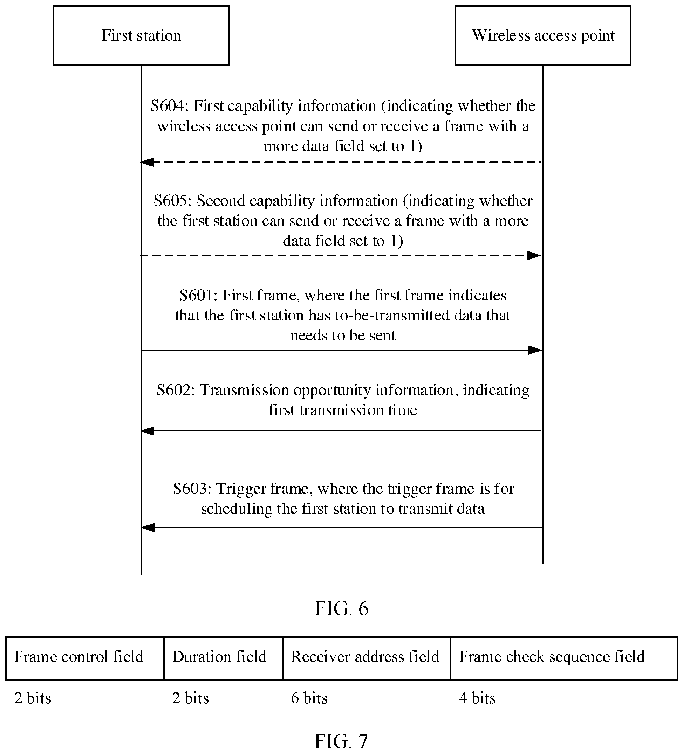

FIG. 6 is a schematic flowchart of a data transmission method according to an embodiment of this application. In this application, that a first STA has to-be-transmitted data that needs to be sent may include that the first STA has the to-be-transmitted data that needs to be sent to an AP, that is, the first STA needs to send uplink data. That a first STA has to-be-transmitted data that needs to be sent may alternatively include that the first STA has the to-be-transmitted data that needs to be sent to another STA, that is, the first STA needs to send P2P data. For example, if in a frame control field included in a frame sent by the first STA, a to distribution system field is set to 1, and a from distribution system field is set to 0, it indicates that the first STA needs to send uplink data; or if in a frame control field included in a frame sent by the first STA, a to distribution system field is set to 0, and a from distribution system field is set to 1, it indicates that the first STA needs to send downlink data; or if in a frame control field included in a frame sent by the first STA, a to distribution system field is set to 0, and a from distribution system field is set to 0, it indicates that the first STA needs to send P2P data.

S601: The first STA sends a first frame to the AP, and correspondingly the AP receives the first frame sent by the first STA, where the first frame indicates that the first STA has to-be-transmitted data that needs to be sent.

The first STA may be a STA associated with the AP. When the first STA has the to-be-transmitted data that needs to be sent, the first STA may notify, by using the first frame, the AP that the first STA has the to-be-transmitted data that needs to be sent. In an example, the first frame may include a more data field, and the more data field may indicate that the first STA has the to-be-transmitted data that needs to be sent. That is, the first STA reuses the more data field to notify the AP that the first STA has the to-be-transmitted data that needs to be sent. For example, the more data field occupies 1 bit. If a value of the 1 bit is "0", it indicates that the first STA does not have the to-be-transmitted data that needs to be sent. Correspondingly, if a value of the 1 bit is "1", it indicates that the first STA has the to-be-transmitted data that needs to be sent. Optionally, for a trigger-based physical layer convergence procedure (Physical layer convergence procedure, PLCP) protocol data unit (trigger-based PLCP service data unit, TB-PPDU), the more data may also be set to 0 to indicate that there is no to-be-transmitted data.

A specific name of the first frame is not limited in this embodiment of this application. For example, the first frame may also be referred to as an immediate response frame or an acknowledgement frame. It should be noted that in this embodiment of this application, that the first STA indicates, by using the more data field, that the first STA has the to-be-transmitted data that needs to be sent is used as an example. A specific field indicating that the first STA has the to-be-transmitted data that needs to be sent is not limited in this embodiment of this application. For example, the first STA may alternatively indicate, by using another field or a reserved field in the PPDU, that the first STA has the to-be-transmitted data that needs to be sent.

In a possible implementation, the first frame is the acknowledgement frame, for example, an ACK frame or a BA frame. Specifically, for example, the ACK frame or the BA frame may include a frame control field, and a frame structure of the frame control field is shown in FIG. 3. Optionally, the BA frame may carry a buffer status report (buffer status report, BSR) or a newly defined buffer report (buffer report), and the more data field in the BA frame is for indicating whether the BA frame carries the BSR or the newly defined buffer report, to indicate whether the first STA has the to-be-transmitted data that needs to be sent. If the more data field is set to 1, it indicates that the BA frame carries the BSR or the newly defined buffer report, and the BSR or the newly defined buffer report may indicate whether the first STA has the to-be-transmitted data that needs to be sent.

In consideration of a duplex capability of the AP, for example, the AP has a limited full-duplex capability, that is, in a process of sending data to one STA, the AP can receive only a specific frame sent by another STA. For example, after obtaining a TXOP, the AP sends downlink data to a second STA by using the TXOP. During a period in which the AP sends the downlink data to the second STA by using the TXOP, the first STA has the to-be-transmitted data that needs to be sent. In this case, if the first STA still sends the ACK frame or the BA frame to the AP, because the AP cannot receive the ACK frame or the BA frame, the AP cannot know that the first STA has the to-be-transmitted data that needs to be sent.

Therefore, in this embodiment of this application, when the first STA determines that the AP can receive only a specific frame sent by the first STA in the process of sending the data to the second STA, the first STA may notify, by using the specific frame, the AP that the first STA has the to-be-transmitted data that needs to be sent, that is, the first frame is the specific frame. The specific frame may include the more data field, and the more data field is for indicating that there is the to-be-transmitted data that needs to be sent. To enable the AP to clearly determine who has the to-be-transmitted data that needs to be sent, the specific frame further includes identity information of the first station.

In a possible implementation, the specific frame is a CTS-to-Self frame. For example, the CTS-to-Self frame includes a more data field and a receiver address field, and the receiver address field indicates address information of the first station. For example, FIG. 7 is a diagram of a format of a CTS frame. The CTS frame includes a 2-bit frame control (frame control) field, a 2-bit duration (duration) field, a 6-bit receiver address (receiver address) field, and a 4-bit frame check sequence (frame check sequence, FCS) field. It should be understood that, if the receiver address field is set to a transmitter address, the CTS frame is referred to as a CTS-to-Self frame. The duration field may indicate first transmission time, and the receiver address field may indicate the address information of the first station. The AP receives the CTS-to-Self frame sent by the first STA, and may determine, based on the more data field and the receiver address field in the CTS-to-Self frame, whether the first STA has the to-be-transmitted data that needs to be sent. It should be noted that a specific implementation form of the specific frame is not limited in this embodiment of this application. For example, the specific frame may be a frame other than the CTS-to-Self frame, provided that the frame includes the more data field and the identity information of the first station.

The first AP receives the first frame sent by the first STA, and may determine, based on the more data field in the first frame, that the first STA has the to-be-transmitted data that needs to be sent. In an implementation, if a priority of the data that needs to be sent by the first STA is higher than a priority of data that needs to be sent by the current AP, the AP may preferentially enable the first STA to send the data. On the contrary, if the priority of the data that needs to be sent by the first STA is lower than the priority of the data that needs to be sent by the current AP, the AP does not need to preferentially enable the first STA to send the data. To ensure that data with a high priority is preferentially sent, in addition to notifying the first STA that there is the to-be-transmitted data that needs to be sent, the first STA may further notify the AP of a priority of the to-be-sent data of the first STA, to assist the AP in determining whether to allocate the first transmission time to the first STA, to avoid a case in which data with a long latency is preferentially transmitted because the AP allocates the first transmission time to the first STA by default.

In this embodiment of this application, the AP may implicitly or explicitly indicate whether the priority of the to-be-sent data of the first STA is higher than the priority of the data that needs to be sent by the AP. For example, the following several indication manners may be included.

**In an indication manner 1,** in addition to indicating that the first STA has the to-be-transmitted data that needs to be sent, the more data field further indicates that the priority of the to-be-transmitted data of the first STA is higher than the priority of the data sent by the current AP. For example, the more data field further indicates that the priority of the to-be-transmitted data of the first STA is higher than the priority of the data sent by the current AP to the first STA. It may also be considered that when the priority of the to-be-transmitted data of the first STA is higher than the priority of the data sent by the current AP to the first STA, the first STA indicates, to the AP by using the more data field, that the first STA has the to-be-transmitted data that needs to be sent. The AP may clearly determine, by using the more data field, that the priority of the to-be-transmitted data of the first STA is higher than the priority of the data sent by the current AP to the first STA, and the AP needs to preferentially enable the first STA to send the data. Optionally, when the priority of the to-be-transmitted data of the first STA is not higher than the priority of the data sent by the current AP to the first STA, the first STA does not indicate, to the AP, that there is the to-be-transmitted data that needs to be sent.

**In an indication manner 2,** the more data field may indicate a data type of the to-be-transmitted data of the first STA. Different data types correspond to different priorities. Therefore, the AP may further determine, based on the data type indicated by the more data field, whether the priority of the to-be-transmitted data of the first STA is higher than the priority of the data sent by the current AP.

Classification of the data types is not limited in this embodiment of this application. For example, the data types may be classified based on a transmission latency requirement of the data. The data type may include low-latency data or latency-sensitive data and common-latency data, and a priority of the low-latency data or the latency-sensitive data is higher than a priority of the common-latency data. It should be understood that the low-latency data and the common-latency data are relative. For example, if a latency of a specific piece of data is less than a first latency threshold, the data is the low-latency data. Correspondingly, if a latency of a specific piece of data may be greater than a first latency threshold, the data is the common-latency data. Therefore, the more data field indicates the low-latency data or the latency-sensitive data, and the AP may determine that the priority of the to-be-transmitted data of the first STA is higher than the priority of the data sent by the AP.

**In an indication manner 3,** the first frame further includes a first field, and the first field may indicate a service identifier (traffic identifier, TID) and/or an access type (access category, AC) of the to-be-transmitted data of the first STA.

It should be understood that the TID may be for indicating a priority of a service. For example, the TID occupies 4 bits, and a value range of the TID is 0 to 15. Different TIDs correspond to different priorities. The first frame includes the more data field and the first field. After receiving the first frame, and determining, based on the more data field, that the first STA has the to-be-transmitted data that needs to be sent, the AP further determines, based on the TID indicated by the first field, the priority of the to-be-transmitted data of the first STA, to determine whether the priority of the to-be-transmitted data of the first STA is higher than the priority of the data sent by the current AP. It should be noted that the first field may be a newly defined field, or may be an already defined field. A specific name of the first field is not limited in this embodiment of this application. For example, the first field may be a TID information field, or the first field may be one or more of the to distribution system field, the from distribution system field, the more fragment field, and the retry field in the frame control field shown in FIG. 3.

Different ACs correspond to different priorities during channel access. For example, if the AC may occupy 2 bits, there are a voice service access category (access category voice, AC_VO), a video service access category (access category video, AC_VI), a background service access category (access category background, AC_BK), a best effort service access category (access category best effort, AC_BE), and the like. That is, AC_VO indicates that the access type (or access type) is a voice (voice) stream, AC_VI indicates that the access type is a video (video) stream, AC_BE indicates that the access type is a best effort (best effort) stream, and AC_BK indicates that the access type is a background (background) stream. Optionally, a priority of the voice stream > a priority of the video stream > a priority of the best effort stream > a priority of the background stream. In other words, a descending order of priorities is: AC-VO, AC-VI, AC-BE, and AC-BK. It may be understood that a higher priority indicates a lower required latency. After receiving the first frame, and determining, based on the more data field, that the first STA has the to-be-transmitted data that needs to be sent, the AP further determines, based on the AC indicated by the first field, the priority of the to-be-transmitted data of the first STA, to determine whether the priority of the to-be-transmitted data of the first STA is higher than the priority of the data sent by the current AP.

**In an indication manner 4,** the first frame further includes a second field, and the second field may indicate remaining time for discarding the to-be-transmitted data of the first STA. Shorter remaining time for discarding the to-be-transmitted data of the first STAindicates a higher priority of the to-be-transmitted data of the first STA.

The first frame sent by the first STA to the AP may include the more data field and the second field, the more data field may indicate that the first STA has the to-be-transmitted data that needs to be sent, and the second field indicates the remaining time for discarding the to-be-transmitted data of the first STA. After receiving the first frame, and determining, based on the more data field, that the first STAhas the to-be-transmitted data that needs to be sent, the AP further determines the priority of the to-be-transmitted data of the first STA based on the remaining time that is indicated by the second field and that is for discarding the to-be-transmitted data, to determine whether the priority of the to-be-transmitted data of the first STA is higher than the priority of the data sent by the current AP.

For example, a plurality of pieces of remaining time for discarding the to-be-transmitted data may be predefined, and different remaining time corresponds to different indexes. Table 1 shows a correspondence between the remaining time for discarding the to-be-transmitted data of the first STA and the index. As shown in Table 1, the second field indicates 3, it may indicate that the remaining time for discarding the to-be-transmitted data of the first STA is less than 1.5 ms. It should be noted that the first field may be a newly defined field, or may be an already defined field. A specific name of the second field is not limited in this embodiment of this application. For example, the second field may be a retry field, a protected frame field, or any +HTC field indicating whether an HT control field exists in the frame control field shown in FIG. 3.

**Table 1**

| Index | Remaining time for discarding |
|---|---|
| 0 | < 0.1 ms |
| 1 | < 0.5 ms |
| 2 | < 1.0 ms |
| 3 | < 1.5 ms |
| 4 | < 2.0 ms |
| 5 | < 2.5 ms |
| 6 | < 5.0 ms |
| 7 | < 10 ms |

Any one of the foregoing indication manners may indicate that the first STA has the to-be-transmitted data that needs to be sent, and may further indicate whether the priority of the to-be-transmitted data of the first STA is higher than the priority of the data that needs to be sent by the current AP. In this way, the AP may determine whether to enable the first STA to preferentially send the to-be-transmitted data, so that data with a high priority is preferentially transmitted, thereby reducing the data transmission latency.

It should be additionally noted that, in an alternative solution of this embodiment of this application, a protocol may allow the BA frame to aggregate some TIDs, ACs, or low-latency data frames.

After determining that the first STA has the to-be-transmitted data that needs to be sent, the AP may allocate specific duration to the first STA, for the first STA to send the to-be-transmitted data. If the first STA has a large amount of to-be-transmitted data, duration required for sending the to-be-transmitted data is long, and the duration allocated by the AP to the first STA may be short. This is insufficient for the first STA to complete sending the to-be-transmitted data. On the contrary, an amount of the to-be-transmitted data of the first STA is small, to be specific, duration required for sending the to-be-transmitted data is short. If the duration allocated by the AP to the first STA is short, a waste of resources is caused. Therefore, in this embodiment of this application, in addition to notifying the AP that the first STA has the to-be-transmitted data that needs to be sent, the first STA may further notify the AP of duration that the first STA expects to be allocated by the AP. The duration that the first STA expects to be allocated by the AP may be determined by the first STA based on the to-be-transmitted data. The AP allocates the duration to the first STA based on the duration that the first STA expects to be allocated, to save resources, and improve resource utilization.

For example, in addition to the more data field, the first frame further includes a third field, and the third field may indicate the duration that the first STA expects to be allocated by the AP. After receiving the first frame, and determining, based on the more data field, that the first STA has the to-be-transmitted data that needs to be sent, the AP further determines, based on the third field, the duration allocated to the first STA, for the first STA to send the to-be-transmitted data. It should be noted that the third field may be a newly defined field, or may be an already defined field. A specific name of the third field is not limited in this embodiment of this application.

S602: The AP sends transmission opportunity information to the first STA, and correspondingly the first STA receives the transmission opportunity information sent by the AP, where the transmission opportunity information indicates the first transmission time.

The AP determines that the first STA has the to-be-transmitted data that needs to be sent, and the AP may allocate specific duration (for example, referred to as the first transmission time) to the first STA, for the first STA to send the to-be-transmitted data. For example, the AP may send the transmission opportunity information to the first STA, and the transmission opportunity information may indicate the first transmission time. The AP sends the transmission opportunity information to the first STA in the following two implementations.

**In an implementation 1,** the AP may send a reverse direction grant (Reverse Direction Grant, RDG) to the first STA, and the RGD may indicate to grant all transmission time in a remaining transmission opportunity in the first transmission opportunity to the first STA. In other words, the first transmission time is all the transmission time in the remaining transmission opportunity in the first transmission opportunity. After receiving the RDG sent by the AP, the first STA may send the to-be-sent data to the AP in the first transmission time. If the first STA completes sending of the to-be-transmitted data, and there is still available transmission time in the first transmission time, the first STA may also send the RDG to the AP, to grant remaining transmission time in the first transmission time to the AP for use by the AP.

Alternatively, the AP may reuse a more PPDU field to allocate the first transmission time to the first STA. For example, the AP may send a second frame to the first STA, and the second frame includes the more PPDU field, and that the more PPDU field is set to 1 indicates to grant all transmission time in a remaining transmission opportunity in the first transmission opportunity to the first STA. After receiving the second frame sent by the AP, the first STA may send the to-be-sent data to the AP in the first transmission time. If the first STA completes sending of the to-be-transmitted data, and there is still available transmission time in the first transmission time, the first STA may also send, to the AP, a third frame including a more PPDU field that is set to 0, to forward remaining transmission time in the first transmission time to the AP.

**In an implementation 2,** the AP may allocate, to the first STA based on a TXOP sharing (TXOP Sharing, TXS) mechanism, duration for sending the to-be-transmitted data.

For example, the transmission opportunity information is a multi-user request to send (multi-user request to send, MU-RTS) TXS trigger (Trigger) frame. The AP may send the MU-RTS TXS trigger frame to the first STA, and the MU-RTS TXS trigger frame includes an allocation duration (Allocation Duration) field, for indicating the first transmission time. The first transmission time may be a part of or all transmission time in a remaining transmission opportunity in a first transmission opportunity. Optionally, when the first frame does not carry expected allocated duration information, the AP may set the allocation duration (Allocation Duration) field to all the transmission time in the remaining transmission opportunity, to provide long duration for the first STA, and avoid a case in which the first STA has sufficient duration to complete sending of the to-be-transmitted data as much as possible.

Optionally, the transmission opportunity information may be further for indicating that the first STA is allowed to send the uplink data or the P2P data. It may also be understood that, if the AP sends the MU-RTS TXS trigger frame to the first STA, a TXOP sharing mode subfield may be further for indicating that the first STA is allowed to send the uplink data or the P2P data.

It may be understood that TXS has two modes (Mode), namely, a mode 1 and a mode 2. The mode 1 allows the STA to send only the uplink data by using the allocated time. The mode 2 allows the STA to send the P2P data or the uplink data by using the allocated time. A specific supported mode may be indicated by using the TXOP sharing mode (Sharing Mode) subfield in the MU-RTS TXS trigger frame. If the TXOP sharing mode subfield indicates the mode 2, the first STA may send the data to another STA, and may also send the uplink data to the AP. When the first frame does not carry a type of the to-be-transmitted data (the uplink data or the P2P data), the AP may set the TXOP sharing mode subfield to 2, to allow the first STA to send the P2P data or the uplink data.

S603: The AP sends a trigger frame to the first STA, and correspondingly the first STA receives the trigger frame sent by the AP, where the trigger frame is for scheduling the first STA to transmit the data.

The AP determines that the first STA has the to-be-transmitted data that needs to be sent during the TXOP obtained by the AP. The AP may schedule the first STA to perform data transmission. For example, the AP sends the trigger frame to the first STA, for scheduling the first STA to transmit the data. The trigger frame may include the first transmission time allocated by the AP to the first STA, namely, an uplink trigger-based PPDU length. The first STA sends the to-be-transmitted data to the AP based on the received trigger frame, for example, sends the uplink data to the AP in the first transmission time. Optionally, the first STA may send the buffer report to the AP in the first transmission time. It may be understood that, in addition to the first transmission time, the trigger frame further includes other scheduling information for scheduling the first STA to send the to-be-transmitted data. Because the other scheduling information for scheduling the first STA to send the to-be-transmitted data is not a focus of concern of this embodiment of this application, details are not described herein.

It should be noted that either S602 or S603 may be performed. For example, the AP may perform S602, and does not perform S603; or the AP may perform S603, and does not perform S602.

In this embodiment of this application, the first STA reuses the more data field to notify the AP that the first STAhas the to-be-transmitted data that needs to be sent. Even if the AP obtains a TXOP that is for transmitting data of the AP, the AP can clearly know that the first STA has the to-be-transmitted data that needs to be sent. Therefore, the AP may allocate remaining transmission time in the TXOP of the AP to the first STA or schedule the first STA, so that the first STA can send the to-be-transmitted data in time, thereby reducing a transmission latency of the to-be-transmitted data.

It may be understood that the first STA indicates, by using the more data field, that there is the to-be-transmitted data that needs to be sent, and the AP needs to have a capability of receiving a frame with the more data field set to 1. That the AP has a capability of receiving a frame with the more data field set to 1 may also be understood as that the AP can receive (or support to receive) the frame with the more data field set to 1. However, the first STA may not know whether the AP can receive the frame with the more data field set to 1.

Therefore, in a possible implementation, the AP may notify the first STA whether the AP can send or receive the frame with the more data field set to 1. The first STA determines that the AP can send or receive the frame with the more data field set to 1, and the first STA indicates, by using the more data field, that there is the to-be-transmitted data that needs to be sent.

S604: The AP sends first capability information to the first STA, and correspondingly the first STA receives the first capability information sent by the AP.

The first capability information indicates that the AP can send or receive the frame with the more data field set to 1. The first capability information may be carried in an EHT operation element (Operation element) field. For example, 1-bit indication information is added to the EHT operation element, to indicate whether the AP can send or receive the frame with the more data field set to 1.

Alternatively, the first capability information may be carried in a more data ACK field, that is, the AP reuses the more data ACK field to indicate whether the frame with the more data field set to 1 can be sent or received. For example, that the more data ACK field is set to 1 indicates that the AP can send or receive the frame with the more data field set to 1; or that the more data ACK field is set to 0 indicates that the AP cannot send or receive the frame with the more data field set to 1.

That the AP sends the first capability information to the first STA may be that the AP sends a fourth frame to the first STA, where the fourth frame includes a frame control field, the frame control field includes a QoS Info field, and a structure of the QoS Info field is shown in FIG. 5. If the AP is an extremely high throughput (extremely high throughput, EHT) AP, when the more data ACK field is set to 1, it indicates that the EHT AP can send or receive an ACK frame and a BA frame with the more data set to 1. On the contrary, when the more data ACK field is set to 0, it indicates that the EHT AP cannot send or receive an ACK frame and a BA frame with the more data set to 1. The EHT AP may send, to the STA in a power saving mode, the ACK frame and the BA frame with the more data field set to 1, to notify the STA to keep in an awake state, and the EHT AP has the to-be-transmitted data that needs to be sent to the STA. For a high efficiency (high efficiency, HE) AP, when the more data Ack field is set to 1, it indicates that the HE AP can send an ACK frame and a BA frame with the more data set to 1; or otherwise, the field is set to 0. For a non-HE AP, the more data Ack field is a reserved field. When an EHT STAreceives an ACK frame or a BA frame with the more data set to 1, if the EHT STA is in a power saving mode, the EHT STA keeps in an awake state. Alternatively, when the EHT STA receives the ACK frame or the BA frame with the more data set to 1, the EHT STA may grant the obtained TXOP to the AP by using the RDG mechanism. Certainly, if the EHT STA is in the power saving mode, the EHT STA needs to keep in the awake state.

S605: The first STA sends second capability information to the AP, and correspondingly the AP receives the second capability information sent by the first STA.

The second capability information indicates that the first STA can send or receive the frame with the more data field set to 1. It should be understood that if the AP does not know whether the STA can send or receive the frame with the more data field set to 1, the first STA indicates, to the AP by using the frame with the more data field set to 1, that the first STA has the to-be-transmitted data that needs to be sent, and the AP may not receive the frame that is sent by the first STA and in which the more data field is set to 1. Therefore, in a possible implementation, the first STA may also notify the AP whether the first STA can send or receive the frame with the more data field set to 1. The AP determines that the first STA can send or receive the frame with the more data field set to 1, and the AP receives the frame that is sent by the first STA and in which the more data field is set to 1.

Similar to the first capability information, the second capability information may also be carried in an EHT operation element, and 1 bit in the EHT operation element is for indicating whether the AP can send or receive the frame with the more data field set to 1. Alternatively, the second capability information may be carried in a more data ACK field, that is, the first STA reuses the more data ACK field to indicate whether the frame with the more data field set to 1 can be sent or received. For example, if the more data ACK field is set to 1, it indicates that the first STA can send or receive the frame with the more data field set to 1.

That the first STA sends the second capability information to the AP may be that the first STA sends a frame control field to the AP, where the frame control field includes a QoS Info field, and a structure of the QoS Info field is shown in FIG. 5. If the first STA is a non-AP non-HE STA, when the more data ACK field is set to 1, it indicates that the first STA supports to send or receive an ACK frame and a BA frame with the more data set to 1, and keeps in an awake state. On the contrary, if the more data ACK field is set to 0, it indicates that the first STA cannot send or receive an ACK frame and a BA frame with the more data set to 1. If the first STA is a non-AP STA, when the more data ACK field is set to 1, it indicates that the first STA can send or receive an ACK frame and a BA frame with the more data set to 1, and keep in an awake state. For example, the first STA may send, to the AP, an ACK frame or a BA frame with the more data set to 1, for indicating that the first STA has the to-be-transmitted data that needs to be sent. When the AP receives the ACK frame or the BA frame that is sent by the first STA and in which the more data is set to 1, the AP may allocate, to the first STA, duration for sending the to-be-transmitted data.

It should be noted that a sequence of performing S604 and S605 is not limited, that is, S604 may be performed before S605, or may be performed after S605. In addition, the AP may consider, by default, that the first STA can send or receive the frame with the more data set to 1. Similarly, the first STA may consider, by default, that the AP can send or receive the frame with the more data set to 1. Therefore, S604 and S605 are not mandatory steps, and are shown by dashed lines in FIG. 6. If S604 needs to be performed, S604 may be performed before S601. If S605 needs to be performed, S605 may be performed before S601.

In the foregoing embodiments of this application, the method provided in embodiments of this application is described separately from perspectives of an AP, a first STA, and interaction between an AP and a first STA. To implement functions in the method provided in embodiments of this application, the AP and the STA may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, communication apparatuses, in embodiments of this application, configured to implement the foregoing method. Therefore, all the foregoing content may be used in the following embodiments. Repeated content is not described again.

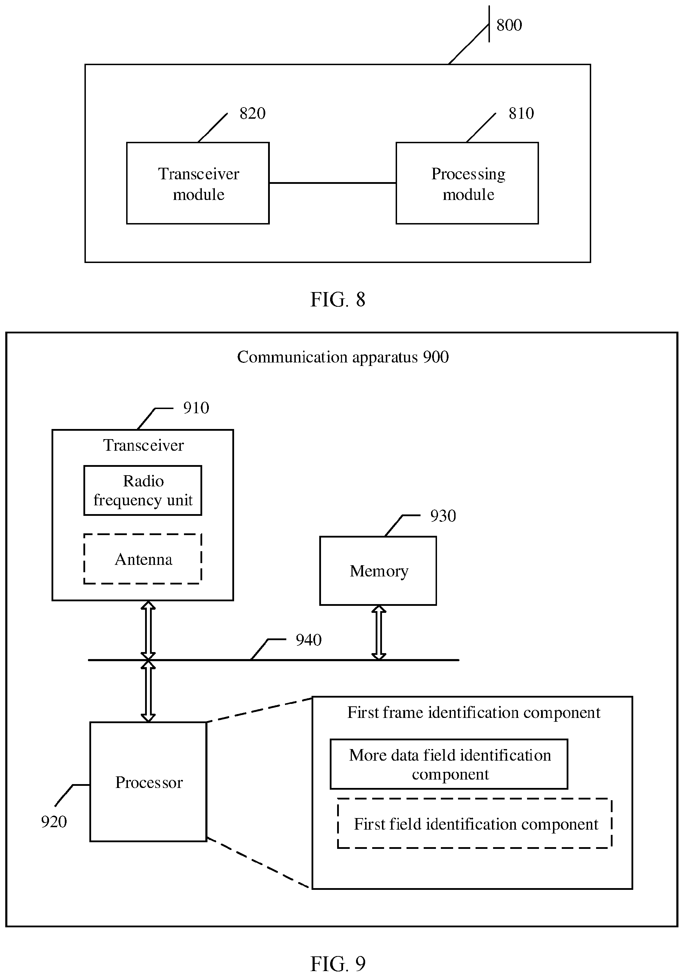

FIG. 8 is a block diagram of a communication apparatus 800 according to an embodiment of this application. The communication apparatus 800 can correspondingly implement functions or steps implemented by a first STA or an AP in the foregoing method embodiments. The communication apparatus may include a processing module 810 and a transceiver module 820. Optionally, the communication apparatus may further include a storage unit. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing units may be disposed independently, or may be partially or completely integrated.

For example, the communication apparatus 800 can correspondingly implement behavior and functions of the first STA in the foregoing method embodiments. For example, the communication apparatus 800 may be a STA, or may be a component (for example, a chip or a circuit) used in the STA. The transceiver module 820 may be configured to perform all sending or receiving operations performed by the first STA in the embodiment shown in FIG. 6, for example, S601, S602, S603, and S604 in the embodiment shown in FIG. 6, and/or configured to support another process of the technology described in this specification. The processing module 810 is configured to perform all operations, except the sending or receiving operations, performed by the first STA in the embodiment shown in FIG. 6, for example, generate the first frame, and/or configured to support another process of the technology described in this specification.

In a possible implementation, the processing module 810 is configured to generate a first frame, where the first frame is for indicating that the communication apparatus 800 has to-be-transmitted data that needs to be sent; and the transceiver module 820 is configured to send the first frame to an AP.

In an optional implementation, the first frame includes a more data field, and the more data field is for indicating that the communication apparatus 800 has the to-be-transmitted data that needs to be sent.

In an optional implementation, the first frame is an acknowledgement frame, for example, an ACK frame or a BA frame.

In an optional implementation, the first frame is a specific frame, and the specific frame further includes identity information of the communication apparatus 800.

In an optional implementation, the processing module 810 is further configured to determine that the AP can receive the specific frame of the communication apparatus 800 in a process of sending data to a second STA.

In an optional implementation, the transceiver module 820 is further configured to: receive transmission opportunity information sent by the AP, where the transmission opportunity information is for indicating first transmission time; and send the to-be-transmitted data to the AP in the first transmission time. The first transmission time is a part of or all transmission time in a remaining transmission opportunity in a first transmission opportunity. The first transmission opportunity is a channel transmission opportunity that is obtained by the AP and that is for sending data to the communication apparatus 800.

In an optional implementation, the transceiver module 820 is specifically configured to receive an RDG or a more PPDU field sent by the AP.

In an optional implementation, the transmission opportunity information is a transmission opportunity sharing trigger frame, the transmission opportunity sharing trigger frame includes an allocation duration field, and the allocation duration field is for indicating the first transmission time.

In an optional implementation, the transmission opportunity information is further for indicating that the communication apparatus 800 is allowed to send uplink data or P2P data.

In an optional implementation, the transceiver module 820 is further configured to: receive a trigger frame sent by the AP; and send the uplink data to the AP based on the trigger frame. The trigger frame is for scheduling the communication apparatus 800 to send the uplink data.

In an optional implementation, the more data field is further for indicating that a priority of the to-be-transmitted data of the communication apparatus 800 is higher than a priority of the data sent by the AP to the communication apparatus 800.

In an optional implementation, that the more data field is for indicating that the communication apparatus 800 has the to-be-transmitted data that needs to be sent includes: The more data field is for indicating that the to-be-transmitted data of the communication apparatus 800 is low-latency data or latency-sensitive data.

In an optional implementation, the first frame further includes a first field, and the first field is for indicating a service identifier and/or an access type of the to-be-transmitted data of the communication apparatus 800.

In an optional implementation, the first frame further includes a second field, the second field is for indicating remaining time for discarding the to-be-transmitted data of the communication apparatus 800, and shorter remaining time for discarding the to-be-transmitted data indicates a higher priority of the to-be-transmitted data.

In an optional implementation, the first frame further includes a third field, and the third field is for indicating duration that the communication apparatus 800 expects to be allocated by the AP.

In an optional implementation, the transceiver module 820 is further configured to receive first capability information sent by the AP, where the first capability information indicates that the AP can send or receive a frame with the more data field set to 1.

In an optional implementation, the first capability information is carried in a more data acknowledgement field, and the more data acknowledgement field being set to 1 indicates that the AP can send or receive the frame with the more data field set to 1.

In an optional implementation, the transceiver module 820 is further configured to send second capability information to the AP, where the second capability information indicates that the communication apparatus 800 can send or receive the frame with the more data field set to 1.

In a possible implementation, the second capability information is carried in a more data acknowledgement field, and the more data acknowledgement field being set to 1 indicates that the communication apparatus 800 can send or receive the frame with the more data field set to 1.

For example, the communication apparatus 800 can correspondingly implement behavior and functions of the AP in the foregoing method embodiments. For example, the communication apparatus 800 may be an AP, or may be a component (for example, a chip or a circuit) used in the AP. The transceiver module 820 may be configured to perform all sending or receiving operations performed by the AP in the embodiment shown in FIG. 6, for example, S601 to S605 in the embodiment shown in FIG. 6, and/or configured to support another process of the technology described in this specification. The processing module 810 is configured to perform all operations, except the sending or receiving operations, performed by the first device in the embodiment shown in FIG. 6, for example, generate the first capability information, and/or configured to support another process of the technology described in this specification.

In a possible implementation, the transceiver module 820 is configured to receive a first frame sent by a first STA, and send transmission opportunity information to the first STA; or the transceiver module 820 is configured to receive a first frame sent by a first STA, and send a trigger frame to the first STA, where the first frame is for indicating that the first STA has to-be-transmitted data that needs to be sent, the transmission opportunity information is for indicating a first transmission opportunity, the first transmission opportunity is a part of or all transmission opportunities in a remaining transmission opportunity in the first transmission opportunity, the first transmission opportunity is a channel transmission opportunity that is obtained by the communication apparatus 800 and that is for sending data to the first STA, and the trigger frame is for scheduling the first STA to send uplink data.

In an optional implementation, the first frame includes a more data field, and the more data field is for indicating that the first STA has the to-be-transmitted data that needs to be sent to the communication apparatus 800.

In an optional implementation, the first frame is an acknowledgement frame.

In an optional implementation, the first frame is a specific frame, and the feature frame further includes identity information of the first STA.

In an optional implementation, the communication apparatus 800 can receive the specific frame of the first STA in a process of sending data to a second STA.

In an optional implementation, the transceiver module 820 is specifically configured to send an RDG or a more PPDU field to the first station.

In an optional implementation, the transmission opportunity information is a transmission opportunity sharing trigger frame, the transmission opportunity sharing trigger frame includes an allocation duration field, and the allocation duration field is for indicating the first transmission time.

In an optional implementation, the transmission opportunity information is further for indicating that the first station is allowed to send uplink data or P2P data.

In a possible implementation, the more data field is further for indicating that a priority of the to-be-transmitted data of the first STA is higher than a priority of the data sent by the communication apparatus 800 to the first STA.

In an optional implementation, that the more data field is for indicating that the first STA has the to-be-transmitted data that needs to be sent to the communication apparatus 800 includes: The more data field is for indicating that the to-be-transmitted data of the first STA is low-latency data or latency-sensitive data.

In an optional implementation, the first frame further includes a first field, and the first field is for indicating a service identifier and/or an access type of the to-be-transmitted data of the first STA.

In an optional implementation, the first frame further includes a second field, and the second field is for indicating remaining time for discarding the to-be-transmitted data of the first STA. Shorter remaining time for discarding the to-be-transmitted data indicates a higher priority of the to-be-transmitted data.

In an optional implementation, the first frame further includes a third field, and the third field is for indicating duration that the first STA expects to be allocated by the communication apparatus 800.

In an optional implementation, the transceiver module 820 is further configured to send first capability information to the first STA, where the first capability information indicates that the communication apparatus 800 can send or receive a frame in which the more data field is set to 1.

In an optional implementation, the first capability information is carried in a more data acknowledgement field, and the more data acknowledgement field being set to 1 indicates that the communication apparatus 800 can send or receive the acknowledgement frame with the more data field set to 1.

In an optional implementation, the transceiver module 820 is further configured to receive second capability information sent by the first STA, where the second capability information indicates that the first STA can send or receive the frame with the more data field set to 1.

In an optional implementation, the second capability information is carried in a more data acknowledgement field, and the more data acknowledgement field being set to 1 indicates that the first STA can send or receive the frame with the more data field set to 1.

It should be understood that in this embodiment of this application, the processing module 810 may be implemented by a processor or a processor-related circuit component, and the transceiver module 820 may be implemented by a transceiver, a transceiver-related circuit component, or a communication interface.

FIG. 9 shows a communication apparatus 900 according to an embodiment of this application. The communication apparatus 900 may be an AP, and can implement a function of the AP in the method provided in embodiments of this application. Alternatively, the communication apparatus 900 may be a STA, and can implement a function of the STA in the method provided in embodiments of this application. Alternatively, the communication apparatus 900 may be an apparatus that can support an AP in implementing a corresponding function in the method provided in embodiments of this application, or can be an apparatus that can support a STAin implementing a corresponding function in the method provided in embodiments of this application. The communication apparatus 900 may be a chip or a chip system. In this embodiment of this application, the chip system may include a chip, or may include a chip and another discrete component. In hardware implementation, the transceiver module 820 may be a transceiver 910. The communication apparatus 900 includes at least one processor 920, configured to implement or support the communication apparatus 900 in implementing functions of a first STA or an AP in the method provided in embodiments of this application. The processor 920 is mainly configured to process a communication protocol and communication data, control the entire communication apparatus, execute a software program, and process data of the software program. For example, the processor 920 generates the foregoing first frame. The processor 920 may include a first frame identification component, and the first frame identification component may further include a more data field identification component, and optionally further include a first field identification component. When the first frame includes a more data field, the communication apparatus 900 indicates, by using the more data field, that there is to-be-transmitted data that needs to be sent. When the first frame includes a more data field and a first field, the communication apparatus 900 indicates, by using the more data field, that there is to-be-transmitted data that needs to be sent, and a priority of the to-be-transmitted data is determined by using the first field. Specifically, the first frame identification component may be configured to use the data transmission method provided in this embodiment of this application.

The communication apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions and/or the data stored in the memory 930, so that the communication apparatus 900 implements the corresponding method. At least one of the at least one memory may be located in the processor.

The communication apparatus 900 may further include the transceiver 910, configured to communicate with another device through a transmission medium, so that an apparatus in the communication apparatus 900 may communicate with the another device. For example, when the communication apparatus is an AP, the another device is a STA; or when the communication apparatus is a STA, the another device is an AP. The processor 920 may send or receive data through the transceiver 910. The transceiver 910 may be specifically a transceiver, and may include a radio frequency circuit and an antenna. The radio frequency circuit is mainly configured to: perform conversion between a baseband signal and a radio frequency signal, and process the radio frequency signal. The antenna is mainly configured to send or receive a radio frequency signal in a form of an electromagnetic wave. An input/output apparatus, for example, a touchscreen, a display, or a keyboard, is mainly configured to: receive data input by a user, and output data to the user. A radio frequency unit may be independent of the communication apparatus 900, or may be integrated into the communication apparatus 900. The antenna may be a remote antenna independent of the communication apparatus 900, or may be an antenna integrated into the communication apparatus 900.

The communication apparatus 900 may be an independent device or may be a part of a large device. For example, the communication apparatus 900 may be an independent integrated circuit IC, a chip, a chip system, or a subsystem; a set including one or more ICs, where optionally, the set of ICs may also include a storage component configured to store data and instructions; an ASIC, for example, a modem (Modem); a module that can be embedded in another device; and a receiver, an intelligent terminal, a wireless device, a handheld device, a mobile unit, a vehicle-mounted device, a cloud device, an artificial intelligence device, or the like.

In this embodiment of this application, a specific connection medium between the transceiver 910, the processor 920, and the memory 930 is not limited. In this embodiment of this application, in FIG. 9, the memory 930, the processor 920, and the transceiver 910 are connected to each other through a bus 940. The bus is represented by using a thick line in FIG. 9. A manner of connection between other components is only schematically described, but is not used as a limitation. The bus may be classified into an address bus, a data bus, a control bus, and the like. For ease of representation, only one thick line is for representing the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logical device, a discrete gate or transistor logical device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory 930 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiments may be a terminal, a circuit, a chip used in the terminal, or another combined device, component, or the like that has a function of the terminal. When the communication apparatus is a terminal, the transceiver module may be a transceiver, and may include an antenna, a radio frequency circuit, and the like. The processing module may be a processor, for example, a central processing unit (central processing unit, CPU). When the communication apparatus is a component that has a function of the terminal, the transceiver module may be a radio frequency unit, and the processing module may be a processor. When the communication apparatus is a chip or a chip system, the transceiver module may be an input/output interface of the chip or the chip system, and the processing module may be a processor of the chip or the chip system.

In a possible product form, the AP or the STA described in embodiments of this application may alternatively be implemented by using the following: one or more FPGAs (field programmable gate arrays), a PLD (programmable logical device), a controller, a state machine, gate logic, a discrete hardware component, any other suitable circuit, or any combination of circuits that can perform various functions described in this application.

It should be understood that the APs in various product forms have any function of the AP in the foregoing method embodiments, and details are not described herein again; and the STAs in various forms have any function of the STA in the foregoing method embodiments, and details are not described herein again.

An embodiment of this application further provides a communication system. Specifically, the communication system includes a STA and an AP, or may further include more APs and access network devices. For example, the communication system includes a STA and an AP that are configured to implement the foregoing related function in FIG. 6. The AP is configured to implement the foregoing related function of the AP in FIG. 6. The STA is configured to implement the foregoing related function of the STAin FIG. 6. For example, the STAmay perform, for example, S601, S602, S604, and S605 in the embodiment shown in FIG. 6, and the AP may perform S601 to S605 in the embodiment shown in FIG. 6.

An embodiment of this application further provides a computer-readable storage medium. The computer-readable storage medium includes instructions. When the instructions are run on a computer, the computer is enabled to perform the method performed by the AP or the STA in FIG. 6.

An embodiment of this application further provides a computer program product. The computer program product includes computer program code. When the computer program code is run on a computer, the computer is enabled to perform the method performed by the AP or the STA in FIG. 6.

An embodiment of this application provides a chip system. The chip system includes a processor and may further include a memory, and is configured to implement a function of the AP or the STA in the foregoing method. The chip system may include a chip, or may include a chip and another discrete component. The processor may be configured to perform, for example but not limited to, baseband related processing; and the transceiver may be configured to perform, for example but not limited to, radio frequency sending or receiving. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of integrated circuit technologies, increasing components may be integrated on a same chip. For example, the digital baseband processor may be integrated on a same chip with a plurality of application processors (for example, but not limited to, a geometric processor and a multimedia processor). The chip may be referred to as a system-on-a-chip (system-on-a-chip). Whether components are independently disposed on different chips or are integrated and disposed on one or more chips depends on specific requirements of a product design. Specific implementation forms of the devices are not limited in embodiments of the present invention.

An embodiment of this application further provides a communication apparatus. The communication apparatus includes a processor and an interface. The processor is configured to perform the data processing method in any one of the foregoing method embodiments. It should be understood that the communication apparatus may be a chip. The processor may be implemented by hardware, or may be implemented by software. When the processor is implemented by hardware, the processor may be a logical circuit, an integrated circuit, or the like. When the processor is implemented by software, the processor may be a general-purpose processor, and is implemented by reading software code stored in a memory. The memory may be integrated into the processor, or may be located outside the processor and exist independently.

An embodiment of this application further provides a communication system. The communication system includes at least one AP and at least one STA. Any AP is configured to implement a function implemented by the AP in any one of the foregoing method embodiments, and any STA is configured to implement a function implemented by the first STA in any one of the foregoing method embodiments.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In addition, the term "for example" in embodiments of this application is used to represent an example or a description. Any embodiment or implementation solution described as an "example" in embodiments of this application should not be explained as being more preferred than another embodiment or implementation solution. That is, the term "for example" is intended to represent a concept in a specific manner.

All or some of the methods in embodiments of this application may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A data transmission method, comprising:
generating, by a first station, a first frame, wherein the first frame is for indicating that the first station has to-be-transmitted data that needs to be sent; and
sending, by the first station, the first frame to a wireless access point.

2. The method according to claim 1, wherein the first frame comprises a more data field, and the more data field is for indicating that the first station has the to-be-transmitted data that needs to be sent.

3. The method according to claim 1 or 2, wherein the first frame is an acknowledgement frame.

4. The method according to claim 1 or 2, wherein the first frame is a specific frame, and the specific frame further comprises identity information of the first station.

5. The method according to claim 4, wherein the method further comprises:
determining, by the first station, that the wireless access point can receive the specific frame of the first station in a process of sending data to a second station.

6. The method according to any one of claims 1 to 5, wherein the method further comprises:
receiving, by the first station, transmission opportunity information sent by the wireless access point, wherein the transmission opportunity information is for indicating first transmission time, the first transmission time is a part of or all transmission time in a remaining transmission opportunity in a first transmission opportunity, and the first transmission opportunity is a channel transmission opportunity that is obtained by the wireless access point and that is for sending data to the first station; and
sending, by the first station, the to-be-transmitted data to the wireless access point in the first transmission time.

7. The method according to any one of claims 1 to 5, wherein the method further comprises:
receiving, by the first station, a trigger frame sent by the wireless access point, wherein the trigger frame is for scheduling the first station to send uplink data; and
sending, by the first station, the uplink data to the wireless access point based on the trigger frame.

8. The method according to any one of claims 2 to 7, wherein the more data field is further for indicating that a priority of the to-be-transmitted data is higher than a priority of the data sent by the wireless access point to the first station.

9. The method according to any one of claims 2 to 7, wherein that the more data field is for indicating that the first station has the to-be-transmitted data that needs to be sent comprises:
the more data field is for indicating that the to-be-transmitted data of the first station is low-latency data or latency-sensitive data.

10. The method according to any one of claims 2 to 7, wherein the first frame further comprises a first field, and the first field is for indicating a service identifier and/or an access type of the to-be-transmitted data.

11. The method according to any one of claims 2 to 7, wherein the first frame further comprises a second field, the second field is for indicating remaining time for discarding the to-be-transmitted data, and shorter remaining time for discarding the to-be-transmitted data indicates a higher priority of the to-be-transmitted data.

12. The method according to any one of claims 2 to 7, wherein the first frame further comprises a third field, and the third field is for indicating duration expected to be allocated by the wireless access point.

13. The method according to any one of claims 1 to 12, wherein the method further comprises:
receiving, by the first station, first capability information sent by the wireless access point, wherein the first capability information indicates that the wireless access point can send or receive a frame with the more data field set to 1.

14. The method according to claim 13, wherein the first capability information is carried in a more data acknowledgement field, and the more data acknowledgement field being set to 1 indicates that the wireless access point can send or receive the frame with the more data field set to 1.

15. The method according to any one of claims 1 to 14, wherein the method further comprises:
sending, by the first station, second capability information to the wireless access point, wherein the second capability information indicates that the first station can send or receive a frame with the more data field set to 1.

16. The method according to claim 15, wherein the second capability information is carried in a more data acknowledgement field, and the more data acknowledgement field being set to 1 indicates that the first station can send or receive the frame with the more data field set to 1.

17. A data transmission method, comprising:
receiving, by a wireless access point, a first frame sent by a first station, wherein the first frame is for indicating that the first station has to-be-transmitted data that needs to be sent; and
sending, by the wireless access point, transmission opportunity information to the first station, wherein the transmission opportunity information is for indicating a first transmission opportunity, the first transmission opportunity is a part of or all transmission opportunities in a remaining transmission opportunity in the first transmission opportunity, and the first transmission opportunity is a channel transmission opportunity that is obtained by the wireless access point and that is for sending data to the first station; or sending, by the wireless access point, a trigger frame to the first station, wherein the trigger frame is for scheduling the first station to send uplink data.

18. The method according to claim 17, wherein the first frame comprises a more data field, and the more data field is for indicating that the first station has the to-be-transmitted data that needs to be sent.

19. The method according to claim 17 or 18, wherein the first frame is an acknowledgement frame.

20. The method according to claim 17 or 18, wherein the first frame is a specific frame, and the specific frame further comprises identity information of the first station.

21. The method according to claim 20, wherein the wireless access point can receive the specific frame of the first station in a process of sending data to a second station.

22. The method according to any one of claims 18 to 21, wherein the more data field is further for indicating that a priority of the to-be-transmitted data is higher than a priority of the data sent by the wireless access point to the first station.

23. The method according to any one of claims 18 to 21, wherein that the more data field is for indicating that the first station has the to-be-transmitted data that needs to be sent comprises:
the more data field is for indicating that the to-be-transmitted data of the first station is low-latency data or latency-sensitive data.

24. The method according to any one of claims 18 to 21, wherein the first frame further comprises a first field, and the first field is for indicating a service identifier and/or an access type of the to-be-transmitted data.

25. The method according to any one of claims 18 to 21, wherein the first frame further comprises a second field, the second field is for indicating remaining time for discarding the to-be-transmitted data, and shorter remaining time for discarding the to-be-transmitted data indicates a higher priority of the to-be-transmitted data.

26. The method according to any one of claims 18 to 21, wherein the first frame further comprises a third field, and the third field is for indicating duration that the first station expects to be allocated by the wireless access point.

27. The method according to any one of claims 17 to 26, wherein the method further comprises:
sending, by the wireless access point, first capability information to the first station, wherein the first capability information indicates that the wireless access point can send or receive a frame with the more data field set to 1.

28. The method according to claim 27, wherein the first capability information is carried in a more data acknowledgement field, and the more data acknowledgement field being set to 1 indicates that the wireless access point can send or receive the frame with the more data field set to 1.

29. The method according to any one of claims 17 to 28, wherein the method further comprises:
receiving, by the wireless access point, second capability information sent by the first station, wherein the second capability information indicates that the first station can send or receive a frame with the more data field set to 1.

30. The method according to claim 29, wherein the second capability information is carried in a more data acknowledgement field, and the more data acknowledgement field being set to 1 indicates that the first station can send or receive the frame with the more data field set to 1.

31. A communication apparatus, comprising a processing module and a transceiver module, wherein
the processing module is configured to generate a first frame, wherein the first frame is for indicating that the communication apparatus has to-be-transmitted data that needs to be sent; and
the transceiver module is configured to send the first frame to a wireless access point.

32. The apparatus according to claim 31, wherein the first frame comprises a more data field, and the more data field is for indicating that the communication apparatus has the to-be-transmitted data that needs to be sent.

33. The apparatus according to claim 31 or 32, wherein the first frame is an acknowledgement frame.

34. The apparatus according to claim 31 or 32, wherein the first frame is a specific frame, and the specific frame further comprises identity information of the communication apparatus.

35. The apparatus according to claim 34, wherein the processing module is further configured to:
determine that the wireless access point can receive the specific frame of the first station in a process of sending data to a second station.

36. The apparatus according to any one of claims 31 to 35, wherein the transceiver module is further configured to:
receive transmission opportunity information sent by the wireless access point, wherein the transmission opportunity information is for indicating first transmission time, the first transmission time is a part of or all transmission time in a remaining transmission opportunity in a first transmission opportunity, and the first transmission opportunity is a channel transmission opportunity that is obtained by the wireless access point and that is for sending data to the first station; and
send the to-be-transmitted data to the wireless access point in the first transmission time.

37. The apparatus according to any one of claims 31 to 35, wherein the transceiver module is further configured to:
receive a trigger frame sent by the wireless access point, wherein the trigger frame is for scheduling the communication apparatus to send uplink data; and
send the uplink data to the wireless access point based on the trigger frame.

38. The apparatus according to any one of claims 32 to 37, wherein the more data field is further for indicating that a priority of the to-be-transmitted data is higher than a priority of the data sent by the wireless access point to the communication apparatus.

39. The apparatus according to any one of claims 32 to 37, wherein that the more data field is for indicating that the communication apparatus has the to-be-transmitted data that needs to be sent comprises:
the more data field is for indicating that the to-be-transmitted data of the communication apparatus is low-latency data or latency-sensitive data.

40. The apparatus according to any one of claims 32 to 37, wherein the first frame further comprises a first field, and the first field is for indicating a service identifier and/or an access type of the to-be-transmitted data.

41. The apparatus according to any one of claims 32 to 37, wherein the first frame further comprises a second field, the second field is for indicating remaining time for discarding the to-be-transmitted data, and shorter remaining time for discarding the to-be-transmitted data indicates a higher priority of the to-be-transmitted data.

42. The apparatus according to any one of claims 32 to 37, wherein the first frame further comprises a third field, and the third field is for indicating duration expected to be allocated by the wireless access point.

43. The apparatus according to any one of claims 31 to 42, wherein the transceiver module is further configured to:
receive first capability information sent by the wireless access point, wherein the first capability information indicates that the wireless access point can send or receive a frame with the more data field set to 1.

44. The apparatus according to claim 33, wherein the first capability information is carried in a more data acknowledgement field, and the more data acknowledgement field being set to 1 indicates that the wireless access point can send or receive the frame with the more data field set to 1.

45. The apparatus according to any one of claims 31 to 44, wherein the transceiver module is further configured to:
send second capability information to the wireless access point, wherein the second capability information indicates that the first station can send or receive a frame with the more data field set to 1.

46. The apparatus according to claim 45, wherein the second capability information is carried in a more data acknowledgement field, and the more data acknowledgement field being set to 1 indicates that the first station can send or receive the frame with the more data field set to 1.

47. A communication apparatus, comprising a processing module and a transceiver module, wherein
the transceiver module is configured to receive a first frame sent by a first station, and send transmission opportunity information to the first station, wherein the first frame is for indicating that the first station has to-be-transmitted data that needs to be sent, the transmission opportunity information is for indicating a first transmission opportunity, the first transmission opportunity is a part of or all transmission opportunities in a remaining transmission opportunity in the first transmission opportunity, and the first transmission opportunity is a channel transmission opportunity that is obtained by the wireless access point and that is for sending data to the first station; or the wireless access point sends a trigger frame to the first station, wherein the trigger frame is for scheduling the first station to send uplink data; and
the processing module is configured to determine the first frame.

48. The apparatus according to claim 47, wherein the first frame comprises a more data field, and the more data field is for indicating that the first station has the to-be-transmitted data that needs to be sent.

49. The apparatus according to claim 47 or 48, wherein the first frame is an acknowledgement frame.

50. The apparatus according to claim 47 or 48, wherein the first frame is a specific frame, and the feature frame further comprises identity information of the first station.

51. The apparatus according to claim 50, wherein the processing module is further configured to receive the specific frame of the first station in a process of sending data to a second station.

52. The apparatus according to any one of claims 48 to 51, wherein the more data field is further for indicating that a priority of the to-be-transmitted data is higher than a priority of the data sent by the wireless access point to the first station.

53. The apparatus according to any one of claims 48 to 51, wherein that the more data field is for indicating that the first station has the to-be-transmitted data that needs to be sent comprises:
the more data field is for indicating that the to-be-transmitted data of the first station is low-latency data or latency-sensitive data.

54. The apparatus according to any one of claims 48 to 51, wherein the first frame further comprises a first field, and the first field is for indicating a service identifier and/or an access type of the to-be-transmitted data.

55. The apparatus according to any one of claims 48 to 51, wherein the first frame further comprises a second field, the second field is for indicating remaining time for discarding the to-be-transmitted data, and shorter remaining time for discarding the to-be-transmitted data indicates a higher priority of the to-be-transmitted data.

56. The apparatus according to any one of claims 48 to 51, wherein the first frame further comprises a third field, and the third field is for indicating duration that the first station expects to be allocated by the wireless access point.

57. The apparatus according to any one of claims 47 to 56, wherein the transceiver module is further configured to:
send first capability information to the first station, wherein the first capability information indicates that the communication apparatus can send or receive a frame with the more data field set to 1.

58. The apparatus according to claim 57, wherein the first capability information is carried in a more data acknowledgement field, and the more data acknowledgement field being set to 1 indicates that the wireless access point can send or receive the frame with the more data field set to 1.

59. The apparatus according to any one of claims 47 to 58, wherein the transceiver module is further configured to:
receive second capability information sent by the first station, wherein the second capability information indicates that the first station can send or receive a frame with the more data field set to 1.

60. The apparatus according to claim 59, wherein the second capability information is carried in a more data acknowledgement field, and the more data acknowledgement field being set to 1 indicates that the first station can send or receive the frame with the more data field set to 1.

61. A communication apparatus, wherein the communication apparatus comprises a processor and a memory, the memory is configured to store a computer program, and the processor is configured to execute the computer program stored in the memory, so that the communication apparatus performs the method according to any one of claims 1 to 16, or the communication apparatus performs the method according to any one of claims 17 to 30.

62. A communication system, comprising a first station and a wireless access point, wherein the first station is configured to perform the method according to any one of claims 1 to 16, and the wireless access point performs the method according to any one of claims 17 to 30.

63. A chip, wherein the chip comprises at least one processor and an interface, and the processor is configured to read and execute instructions stored in a memory; and when the instructions are run, the chip is enabled to perform the method according to any one of claims 1 to 16, or the chip is enabled to perform the method according to any one of claims 17 to 30.

64. A computer-readable storage medium, wherein the computer-readable storage medium stores a computer program, and the computer program comprises program instructions; and when the program instructions are executed by a computer, the computer is enabled to perform the method according to any one of claims 1 to 16, or the computer is enabled to perform the method according to any one of claims 17 to 30.

65. A computer program product, wherein the computer program product stores a computer program; and when the computer program is executed by a computer, the computer is enabled to perform the method according to any one of claims 1 to 16, or the computer is enabled to perform the method according to any one of claims 17 to 30.
